# EUROPEAN PATENT APPLICATION

(11) **EP 2 175 664 A1**
(43) Date of publication of application: **14.04.2010**
(21) Application number: 09172625.7
(22) Date of filing: 09.10.2009
(51) Int. Cl.: H04N 13/00

(54) **Apparatus, method, and medium of converting 2D image to 3D image based on visual attention**

(30) Priority: 09.10.2008 KR 20080099197
(71) Applicant: Samsung Electronics Co., Ltd., Suwon-si, Gyeonggi-do 442-742 (KR)
(72) Inventor: Kim, Ji Won, 121-783, Seoul (KR); Jung, Yong Ju, 302-120, Daejeon-si (KR); Baik, Aron, 446-712, Gyeonggi-do (KR); Park, Du Sik, 443-737, Gyeonggi-do (KR)
(74) Representative: Land, Addick Adrianus Gosling

(57) **Abstract**

A method, apparatus, and medium of converting a two-dimensional (2D) image to a three-dimensional (3D) image based on visual attention are provided. A visual attention map including visual attention information, which is information about a significance of an object in a 2D image, may be generated. Parallax information including information about a left eye image and a right eye image of the 2D image may be generated based on the visual attention map. A 3D image may be generated using the parallax information.

## Description

### BACKGROUND

Example embodiments relate to an apparatus and method of converting a two-dimensional (2D) image to a three-dimensional (3D) image based on visual attention.

Currently, users may be provided with a three-dimensional (3D) image due to the development of a 3D display device. Accordingly, a demand for 3D contents gradually increases.

In general, two-dimensional (2D) images from multiple viewpoints are required to provide a 3D image. In a related art, however, a 2D image of a single viewpoint created in advance may not be used.

Technologies converting a 2D image to a 3D image are required to use contents, created in advance, in a next generation display device.

In a stereo image method widely used in present day, an image may be analyzed, a depth map of the image, that is, a distance between an observer and an object, may be generated, parallax may be generated using the depth map, and thus a 3D image may be provided.

### SUMMARY

Example embodiments may provide an apparatus and method of converting a two-dimensional (2D) image to a three-dimensional (3D) image based on visual attention which may generate a visual attention map of the 2D image, generate and use parallax information based on the generated visual attention map, and thereby may provide an observer with a stereoscopic 3D image.

Example embodiments may also provide an apparatus and method of converting a 2D image to a 3D image based on visual attention which may display a text or an object to appear in a scene relatively close to an observer, and thereby may enable the observer to see the 3D image where the text or the object is protruded and more naturally conspicuous.

According to example embodiments, there may be provided a method of converting a two-dimensional (2D) image to a three-dimensional (3D) image based on visual attention, the method including extracting feature information associated with the visual attention from the 2D image, generating a visual attention map using the feature information, and generating parallax information based on the visual attention using the visual attention map.

The generating of the visual attention map may include extracting a feature map including the feature information associated with the visual attention, and generating the visual attention map using the feature map.

The generating of the visual attention map using the feature map may generate the visual attention map based on a contrast computation which computes a difference between feature information values of each pixel of the feature map and neighbor pixels of each of the pixels.

The generating of the visual attention map using the feature map may compute a histogram distance of feature information values of a predetermined center area and a predetermined surround area of the feature map to generate the visual attention map.

The feature information may include information about at least one of a luminance, a color, a motion, a texture, and an orientation.

The generating of the visual attention map may include extracting a plurality of feature maps including a plurality of types of feature information associated with the visual attention, generating a plurality of visual attention maps using the plurality of feature maps, and generating a final visual attention map through a fusion of the plurality of visual attention maps.

The fusion may be one of a linear fusion and a nonlinear fusion.

The generating of the plurality of visual attention maps may be based on a contrast computation which, for each of the types of feature information, computes a difference between a feature information value corresponding to each pixel of each of the plurality of feature maps and neighbor pixels of each pixel.

The generating of the plurality of visual attention maps using the plurality of feature maps may compute a histogram distance of feature information values of a predetermined center area and a predetermined surrounding area of each of the plurality of feature maps to generate the plurality of visual attention maps.

The predetermined center area and the predetermined surrounding area may form one continuous area, with the predetermined center area being in the center of the one continuous area.

The generating of the visual attention map may include extracting a plurality of subordinate feature maps in a plurality of scales from a feature map including the feature information, the plurality of scales being different from each other, generating a plurality of visual attention maps in the plurality of scales using the plurality of subordinate feature maps in the plurality of scales, and generating a final visual attention map using the plurality of visual attention maps in the plurality of scales.

The generating of the plurality of visual attention maps in the plurality of scales may be based on a contrast computation which, for each of the scales, computes a difference between a feature information value, corresponding to each pixel of each of the plurality of subordinate feature maps and neighbor pixels of each pixel.

The generating of the plurality of visual attention maps in the plurality of scales may compute a histogram distance of feature information values of a predetermined center area and a predetermined surrounding area of each of the plurality of subordinate feature maps to generate the plurality of visual attention maps in the plurality of scales.

The generating of the visual attention map may include extracting a plurality of subordinate feature maps in a plurality of scales from a feature map including the feature information, the plurality of scales being different from each other, generating a plurality of visual attention maps in the plurality of scales using the plurality of subordinate feature maps in the plurality of scales, generating a plurality of visual attention combination maps which combines the plurality of visual attention maps in the plurality of scales for each type of feature information, and generating a final visual attention map through a linear fusion or a nonlinear fusion of the plurality of visual attention combination maps.

The generating of the plurality of visual attention maps in the plurality of scales using the plurality of subordinate feature maps in the plurality of scales may be based on a contrast computation which, for each of the types of feature information, computes a difference between a feature information value corresponding to each pixel of each of the plurality of subordinate feature maps in the plurality of scales and neighbor pixels of each of the pixels.

The generating of the plurality of visual attention maps in the plurality of scales using the plurality of subordinate feature maps in the plurality of scales may compute a histogram distance of feature information values of a predetermined center area and a predetermined surrounding area of each of the plurality of subordinate feature maps to generate the plurality of visual attention maps in the plurality of scales.

The method of converting a two-dimensional (2D) image to a three-dimensional (3D) image based on visual attention may further include generating a 3D image using the parallax information.

The generating of the 3D image uses a left eye image and a right eye image based on the parallax information of the 2D image.

According to example embodiments, there may be provided an apparatus of converting a 2D image to a 3D image based on visual attention, the apparatus including a visual attention map generation unit to extract feature information associated with the visual attention from the 2D image and generate a visual attention map using the feature information, and a parallax information generation unit to generate parallax information based on the visual attention using the visual attention map.

The visual attention map generation unit may include a feature map extraction unit to extract a feature map including the feature information, and a low-level attention computation unit to generate the visual attention map using the feature map.

The low-level attention computation unit may generate the visual attention map based on a contrast computation which computes a difference between feature information values of each pixel of the feature map and neighbor pixels of each of the pixels.

The low-level attention computation unit may compute a histogram distance of feature information values of a predetermined center area and a predetermined surround area of the feature map to generate the visual attention map.

The visual attention map generation unit includes a feature map extraction unit to extract a plurality of feature maps including a plurality of types of feature information associated with an object of the 2D image, a low-level attention computation unit to generate the plurality of visual attention maps using the plurality of feature maps, and a linear/non-linear fusion unit to generate a final visual attention map through a linear fusion or a nonlinear fusion of the plurality of visual attention maps.

The visual attention map generation unit may include a feature map extraction unit to extract a plurality of subordinate feature maps in a plurality of scales from a feature map including the feature information, the plurality of scales being different from each other, a low-level attention computation unit to generate a plurality of visual attention maps in the plurality of scales using the plurality of subordinate feature maps in the plurality of scales, and a scale combination unit to generate a final visual attention map using the plurality of visual attention maps in the plurality of scales.

The visual attention map generation unit may include a feature map extraction unit to extract a plurality of subordinate feature maps in a plurality of scales from a feature map including the feature information, the plurality of scales being different from each other, a low-level attention computation unit to generate a plurality of visual attention maps in the plurality of scales using the plurality of subordinate feature maps in the plurality of scales, a scale combination unit to generate a plurality of visual attention combination maps which combines the plurality of visual attention maps in the plurality of scales for each feature information, and a linear/non-linear fusion unit to generate a final visual attention map through a linear fusion or a nonlinear fusion of the plurality of visual attention combination maps.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

These and/or other aspects will become apparent and more readily appreciated from the following description of the example embodiments, taken in conjunction with the accompanying drawings of which:
FIG. 1 illustrates a system where an apparatus for converting a two-dimensional (2D) image to a three-dimensional (3D) image based on visual attention is applied according to example embodiments;
FIG. 2 illustrates a configuration of a 2D-to-3D image conversion apparatus, for example, the 2D-to-3D image conversion apparatus of FIG. 1;
FIG. 3 illustrates a configuration of a visual attention map generation unit, for example, the visual attention map generation unit of FIG. 2;
FIG. 4 illustrates a flowchart of a visual attention map generation method according to example embodiments;
FIG. 5 illustrates a flowchart of a visual attention map generation method according to other example embodiments;
FIG. 6 illustrates a flowchart of a visual attention map generation method according to still other example embodiments;
FIG. 7 illustrates a flowchart of a visual attention map generation method according to yet other example embodiments;
FIG. 8 illustrates a low-level attention computation method according to example embodiments;
FIGS. 9 and 10 illustrate an example of a low-level attention computation and a low-level attention computation method, respectively, according to other example embodiments;
FIGS. 11 through 14 illustrate respective attention objects in images according to example embodiments;
FIG. 15 illustrates an example of an image according to example embodiments; and
FIG. 16 illustrates a visual attention map where attention objects are displayed according to example embodiments.

### DETAILED DESCRIPTION

Reference will now be made in detail to example embodiments, examples of which are illustrated in the accompanying drawings, wherein like reference numerals refer to the like elements throughout. Example embodiments are described below to explain the present disclosure by referring to the figures.

An apparatus and method of converting a two-dimensional (2D) image to a three-dimensional (3D) image based on visual attention according to example embodiments may extract feature information associated with visual attention from the 2D image, generate a visual attention map using the feature information, and generate parallax information based on the visual attention using the visual attention map.

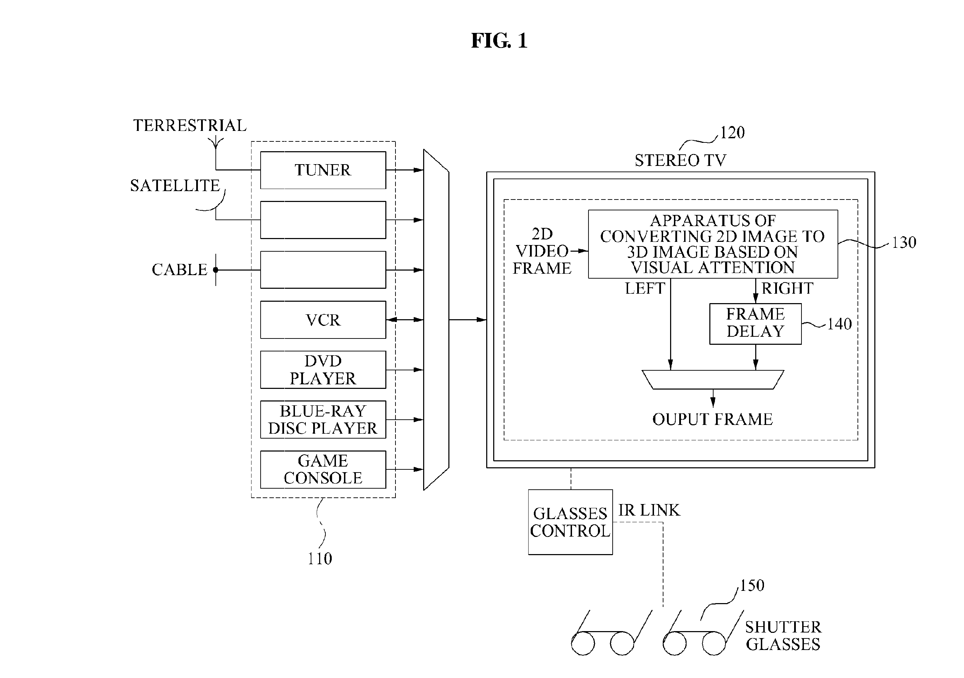

FIG. 1 illustrates a system where an apparatus 130 of converting a 2D image to a 3D image based on a visual attention is applied according to example embodiments. The apparatus 130 of converting a 2D image to a 3D image based on visual attention, hereinafter, referred to as 2D-to-3D image conversion apparatus, and the system where the 2D-to-3D image conversion apparatus 130 is applied are described in detail with reference to FIG. 1.

Specifically, a system where the 2D-to-3D image conversion apparatus 130 is applied to a stereoscopic television (TV) 120 is illustrated in FIG. 1.

The 2D-to-3D image conversion apparatus 130 may convert all kinds of 2D images that may be viewed in a TV into a 3D image.

That is, the 2D-to-3D image conversion apparatus 130 may be included in a variety of image receiving and reproduction apparatuses 110, such as a terrestrial broadcast tuner, a satellite broadcast receiver, a receiving converter of a cable TV, a video cassette recorder (VCR), a digital video disc (DVD) player, a high-definition television (HDTV) receiver, a blue-ray disc player, a game console, etc.

When an image is inputted to the stereo TV 120, the 2D-to-3D image conversion apparatus 130 may generate a left eye image and a right eye image of a stereoscopic method. The stereo TV 120 may alternatingly show the left eye image and the right eye image, and an observer may recognize a 3D image from the images, viewed by a left eye and a right eye, by wearing shutter glasses 150. The shutter glasses 150 may be controlled by an Infrared ray (IR).

Specifically, the 2D-to-3D image conversion apparatus 130 may display a visually interesting area to appear relatively close to the observer, and display a visually uninteresting area to appear relatively far away from the observer. The 2D-to-3D image conversion apparatus 130 may be differentiated from a depth-based stereo conversion in a related art.

Since a parallax is to be computed with respect to an entire image to convert the 2D image into the 3D image, a computation method based on a visual attention map appropriate for a 3D display is required.

The 2D-to-3D image conversion apparatus 130 may perform a feature extraction based on feature information such as information about a luminance, a color, a texture, a motion, an orientation, and the like.

The 2D-to-3D image conversion apparatus 130 may generate a visual attention map using the generated feature information, and generate a final visual attention map using the generated visual attention map.

The final visual attention map may be completed by combining various features. Accordingly, a method based on the above-described operation may be more precise and robust than a method based on a single feature.

Sequentially, parallax information of the 2D image may be generated based on the final visual attention map, and an output frame (or an image) where a frame delay is applied by a frame delay unit 140 may be generated using the parallax information.

The observer may see the output frame through the shutter glasses 150, etc., and thereby may recognize the 3D image.

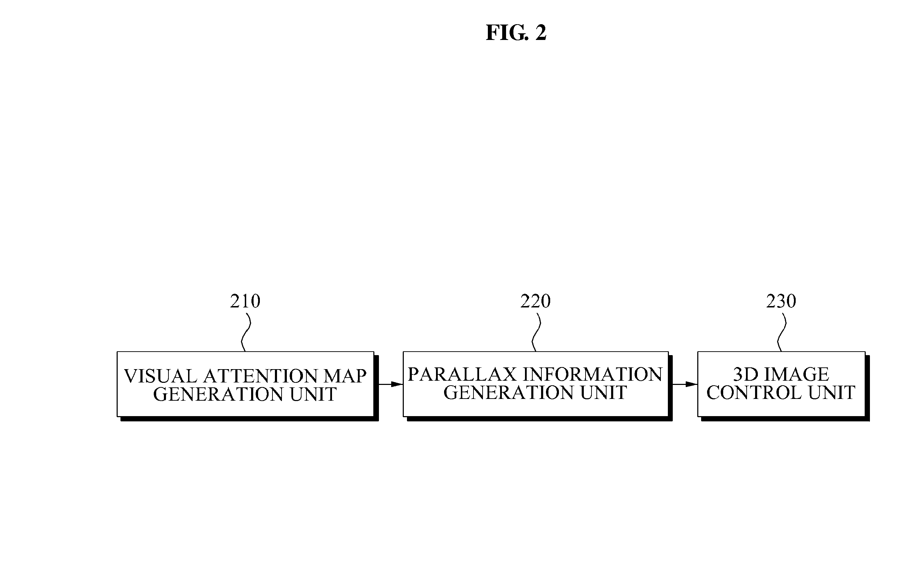

FIG. 2 illustrates a configuration of a 2D-to-3D image conversion apparatus, for example, the 2D-to-3D image conversion apparatus 130 of FIG. 1. The 2D-to-3D image conversion apparatus 130 is described in detail with reference to FIG. 2.

A visual attention map generation unit 210 may generate a visual attention map including visual attention information. The visual attention information may be information about a significance of an object in a 2D image.

The visual attention map may be generated by computing visual attention, and include information about the significance of the object in the 2D image.

The visual attention is studied in various fields such as physiology, psychology, research on artificial neural network systems and computer vision, and the like. It has been proven that a human brain and recognition system generally focus on a particular area of an image. The visual attention may be applied to a solution of existing computer vision issues such as an object recognition, trace, discovery, and the like.

According to example embodiments, the visual attention map may be generated using the visual attention, and parallax may be generated based on the visual attention map to be used for the 3D image conversion.

That is, a visually interesting area may be placed relatively close to the observer, and an uninteresting area may be placed relatively far away from the observer. The 3D image conversion described above may be differentiated from a depth-based stereo conversion in a related art.

A parallax information generation unit 220 may generate parallax information of the 2D image using the visual attention map. In this instance, the parallax information may include information about a left eye image and a right eye image of the 2D image.

A 3D image control unit 230 may control a 3D image to be generated based on the parallax information. In this instance, the 3D image control unit 230 may generate the 3D image using the left eye image and the right eye image.

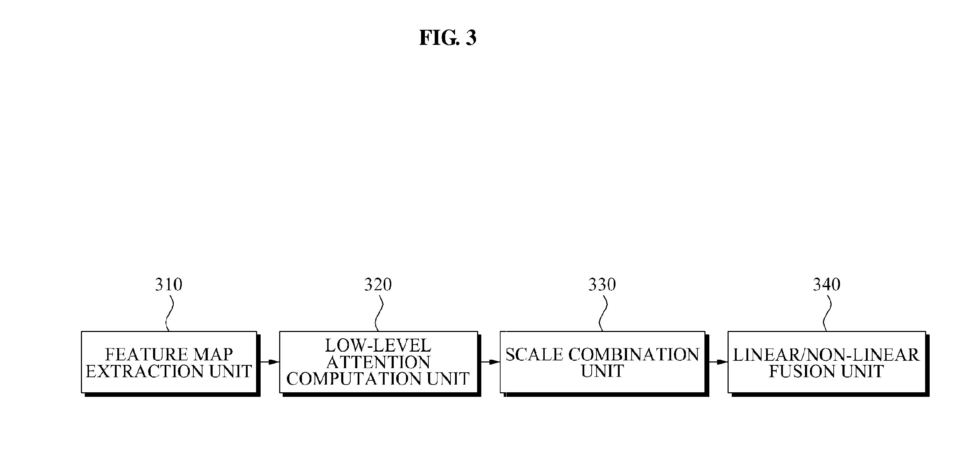

FIG. 3 illustrates a configuration of a visual attention map generation unit, for example, the visual attention map generation unit 210 of FIG. 2. The visual attention map generation unit 210 is described in detail with reference to FIG. 3.

According to example embodiments, the visual attention map generation unit 210 may include a feature map extraction unit 310, a low-level attention computation unit 320, a scale combination unit 330, and a linear/non-linear fusion unit 340.

The feature map extraction unit 310 may extract a feature map including feature information associated with an object.

The low-level attention computation unit 320 may generate a visual attention map using the feature map.

The low-level attention computation unit 320 may generate the visual attention map based on a contrast computation which computes a difference between feature information values of each pixel of the feature map and neighbor pixels of each of the pixels. Also, the low-level attention computation unit 320 may compute a histogram distance of feature information values of a predetermined center area and a predetermined surround area of the feature map to generate the visual attention map.

In this instance, the feature information may include information about at least one of a luminance, a color, a motion, a texture, and an orientation, and may be associated with perception.

According to other example embodiments, the visual attention map generation unit 210 (FIG. 2) may include a feature map extraction unit 310, a low-level attention computation unit 320, and a linear/non-linear fusion unit 340. In this instance, the feature map extraction unit 310 may extract a plurality of feature maps associated with an object of a 2D image. Also, the low-level attention computation unit 320 may generate a plurality of visual attention maps using the plurality of feature maps, and the linear/non-linear fusion unit 340 may generate a final visual attention map through a linear fusion or a nonlinear fusion of the plurality of visual attention maps.

According to still other example embodiments, the visual attention map generation unit 210 (FIG. 2) may include a feature map extraction unit 310, a low-level attention computation unit 320, and a scale combination unit 330. In this instance, the feature map extraction unit 310 may extract a plurality of subordinate feature maps in a plurality of scales from a feature map including feature information. Here, the plurality of scales may be varied, and the feature information may be associated with the object. The low-level attention computation unit 320 may generate a plurality of visual attention maps in the plurality of scales based on a low-level attention computation using the plurality of feature maps in the plurality of scales. Also, the scale combination unit 330 may generate a final visual attention map using the plurality of visual attention maps in the plurality of scales.

According to yet other example embodiments, the visual attention map generation unit 210 (FIG. 2) may include a feature map extraction unit 310, a low-level attention computation unit 320, a scale combination unit 330, and a linear/non-linear fusion unit 340. In this instance, the feature map extraction unit 310 may extract a plurality of subordinate feature maps in a plurality of scales from a feature map including feature information. Here, the plurality of scales may be varied, and the feature information may be associated with the object. The low-level attention computation unit 320 may generate a plurality of visual attention maps in the plurality of scales using the plurality of feature maps in the plurality of scales. Also, the scale combination unit 330 may generate a plurality of visual attention combination maps which combines the plurality of visual attention maps in the plurality of scales for each feature information, and the linear/non-linear fusion unit 340 may generate a final visual attention map through a linear fusion or a nonlinear fusion of the plurality of visual attention combination maps.

Through the various configurations of the visual attention map generation unit 210 described above, a final visual attention map may be generated.

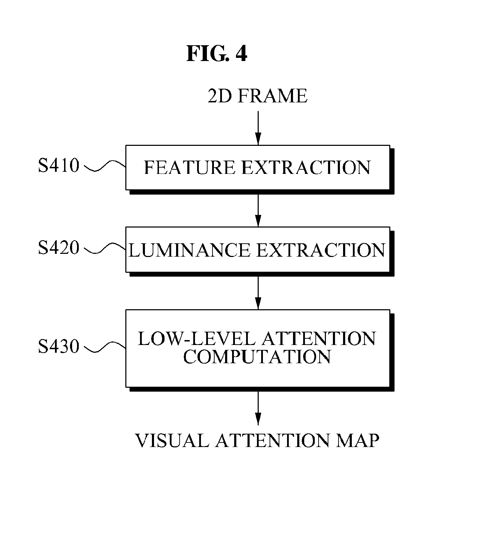

FIG. 4 illustrates a flowchart of a visual attention map generation method according to example embodiments. The method of generating a visual attention map is described in detail with reference to FIG. 4.

In operation S410, a feature map extraction unit may extract feature information associated with an object of a 2D image. In operation S420, the feature map extraction unit may generate a feature map including the feature information.

In this instance, a luminance may be used as the feature information as illustrated in FIG. 4. That is, the feature map extraction unit may extract a luminance component through an image analysis when the 2D image is inputted.

In operation S430, a low-level attention computation unit may generate a visual attention map using the feature map.

In this instance, the low-level attention computation unit may generate the visual attention map based on a contrast computation, or compute a histogram distance of feature information values of a predetermined center area and a predetermined surround area of the feature map, to generate the visual attention map. Here, the contrast computation may compute a difference between feature information values of each pixel of the feature map and neighbor pixels of each of the pixels.

That is, the low-level attention computation unit may generate the visual attention map through the contrast computation or a center-surround histogram computation. Also, the low-level attention computation unit may generate the visual attention map by analyzing a variety of features of luminance.

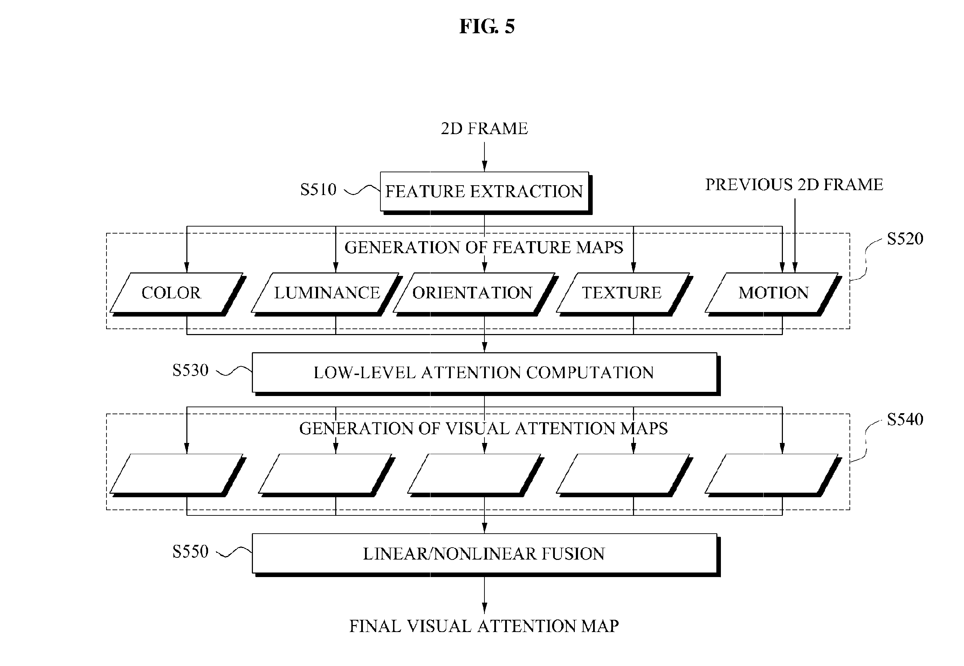

FIG. 5 illustrates a flowchart of a visual attention map generation method according to other example embodiments. The method of generating a visual attention map according to other example embodiments is described in detail with reference to FIG. 5.

In operation S510, a feature map extraction unit may extract a plurality of types of feature information associated with an object of a 2D image. In operation S520, the feature map extraction unit may generate a plurality of feature maps including the extracted plurality of types of feature information.

In this instance, the feature information may include information about at least one of a luminance, a color, a motion, a texture, and an orientation, and may be associated with perception. That is, the feature map extraction unit may extract the plurality of feature maps using the various feature information.

In operation S530, a low-level attention computation unit may perform a low-level attention computation using the extracted feature maps. In operation S540, the low-level attention computation unit may generate a plurality of visual attention maps.

A visual perception is a complex process, and various features may simultaneously affect the visual perception. For example, any two features of the feature information may have an identical result of the low-level attention computation with respect to a predetermined area, or have completely opposite results. Accordingly, the various features are to be comprehensively determined to generate a robust visual attention map.

In operation S550, a linear/non-linear fusion unit may generate a final visual attention map through a linear fusion or a nonlinear fusion of the plurality of generated visual attention maps.

That is, an apparatus of converting a 2D image to a 3D image based on visual attention according to other example embodiments may extract the various feature information, and generate the final visual attention map using the linear fusion or the nonlinear fusion. Therefore, according to other example embodiments, a variety of combinations with respect to the various feature information may be available to generate the final visual attention map.

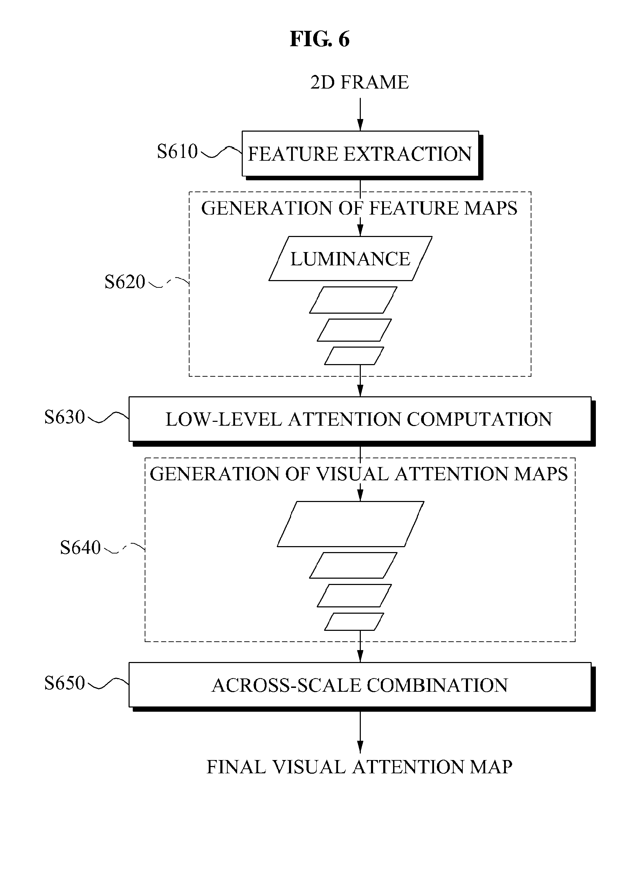

FIG. 6 illustrates a flowchart of a visual attention map generation method according to still other example embodiments. The method of generating a visual attention map according to still other example embodiments is described in detail with reference to FIG. 6.

A size of a generally used 2D image varies. A size of a high definition (HD) video, an ultra HD video, and the like may be too large to perform a complex operation with respect to all pixels using general hardware.

Accordingly, a multi-resolution method may be used with respect to the large images for more efficient operation, as illustrated in FIG. 6.

In operation S610, a feature map extraction unit may extract feature information associated with an object of a 2D image. In operation S620, the feature map extraction unit may extract a plurality of subordinate feature maps in a plurality of scales from a feature map. The plurality of subordinate feature maps may include the extracted feature information.

In operation S630, a low-level attention computation unit may perform a low-level attention computation using the plurality of subordinate feature maps in the plurality of scales. In operation S640, the low-level attention computation unit may generate a plurality of visual attention maps in the plurality of scales.

In operation S650, a scale combination unit may generate a final visual attention map using the plurality of visual attention maps in the plurality of scales through an across-scale combination.

That is, according to still other example embodiments, complexity may be reduced by decreasing a number of operations with respect to each pixel of a high-resolution image, and more information about an entire or a partial area may be provided.

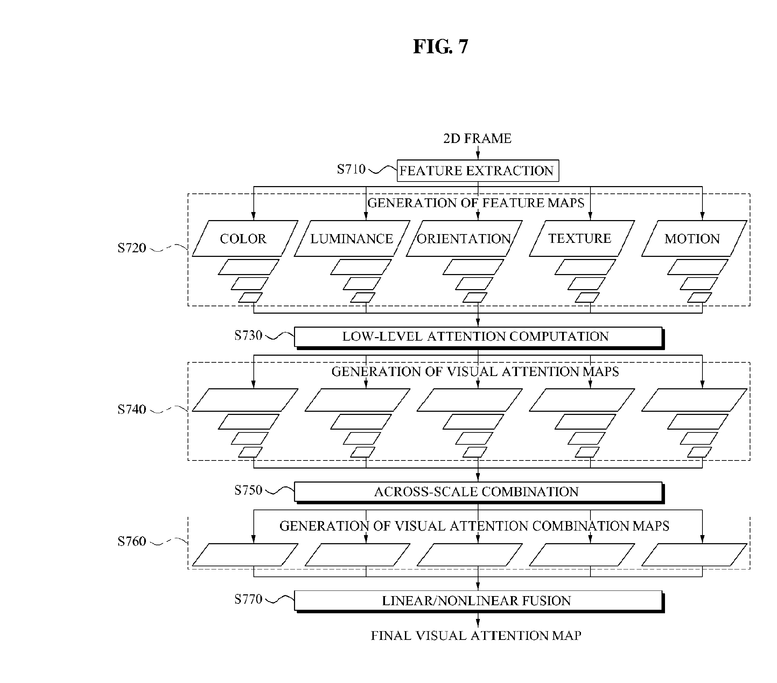

FIG. 7 illustrates a flowchart of a visual attention map generation method according to yet other example embodiments. The method of generating a visual attention map according to yet other example embodiments is described in detail with reference to FIG. 7.

In operation S710, a feature map extraction unit may extract feature information associated with visual attention using a 2D image. In operation S720, the feature map extraction unit may extract a plurality of subordinate feature maps in a plurality of scales from a feature map. Here, the plurality of subordinate feature maps in a plurality of scales may include the feature information associated with the visual attention.

In operation S730, a low-level attention computation unit may perform a low-level attention computation using the plurality of subordinate feature maps in the plurality of scales. In operation S740, the low-level attention computation unit may generate a plurality of visual attention maps in the plurality of scales.

A scale combination unit may perform an across-scale combination in operation S750, and generate a plurality of visual attention combination maps which combines the plurality of visual attention maps in the plurality of scales for each feature information in operation S760.

In operation S770, a linear/non-linear fusion unit may generate a final visual attention map through a linear fusion or a nonlinear fusion of the plurality of visual attention combination maps.

The 2D-to-3D image conversion apparatus according to example embodiments may generate the final visual attention map, and thereby may enable a visually interesting area to be located relatively close to an observer and enable an uninteresting area to be located relatively far away from the observer. Accordingly, parallax may be generated and used for the conversion to the 3D image. Thus, a more realistic stereoscopic 3D image may be provided.

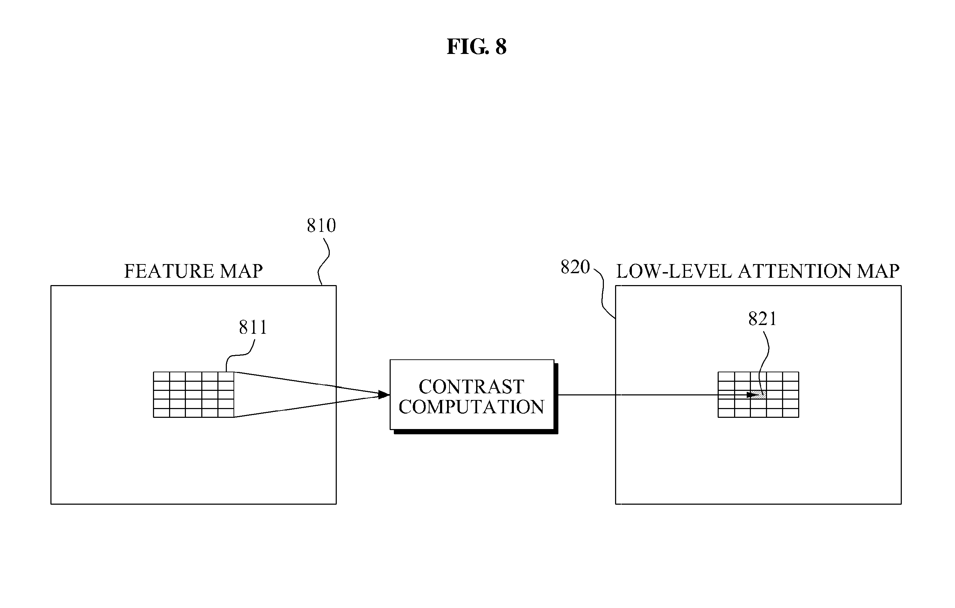

FIG. 8 illustrates a low-level attention computation method according to example embodiments. The low-level attention computation method is described in detail with reference to FIG. 8.

An analysis on a feature map 810 is required to compute a low-level attention map 820.

According to example embodiments, a final visual attention map may be generated through a linear fusion or a nonlinear fusion. A computation method using a contrast for the generation of the final visual attention map is illustrated in FIG. 8.

An attention value 821 of a random pixel may be defined as a feature distance 811 with neighbor pixels. In this instance, the feature distance 811 may be defined to be appropriate for a metric of each feature value. For example, a luminance may be applied to an absolute difference, a squared difference, and the like, and a color may be applied to an Euclidean space in a color space, and the like.

That is, a computation of a contrast-based attention map illustrated in FIG. 8 may be used for all the features associated with visual attention.

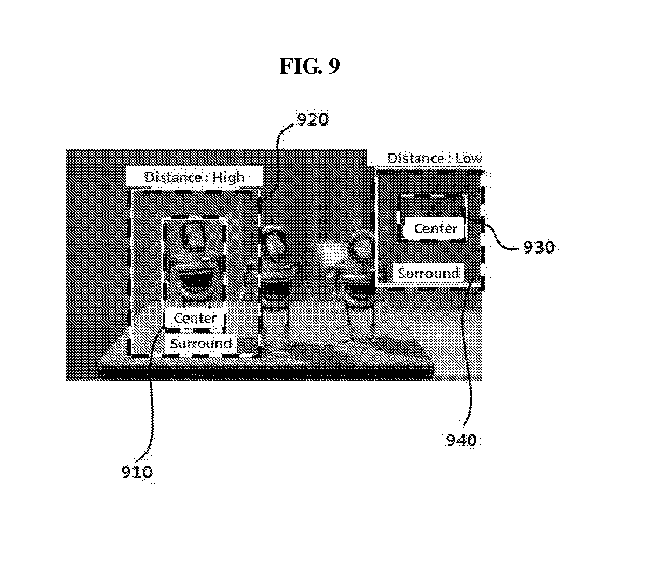

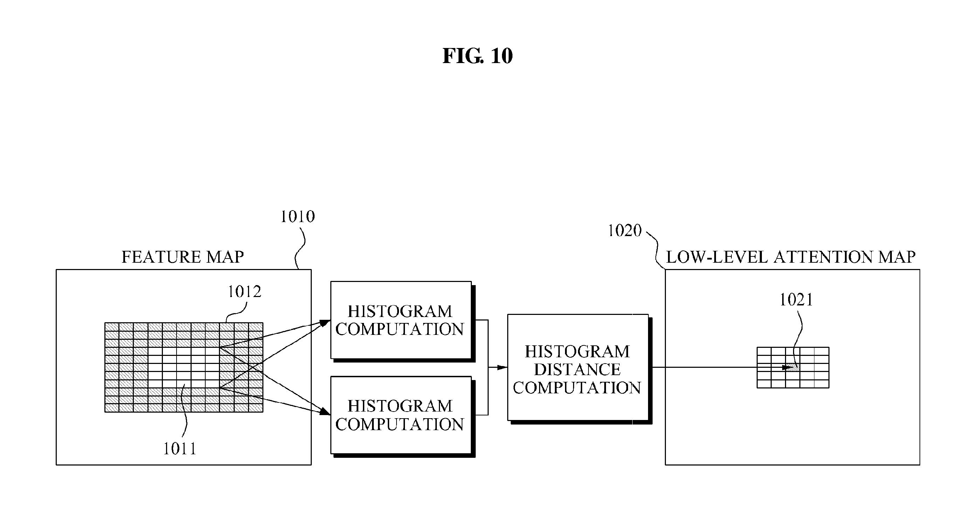

FIGS. 9 and 10 illustrate an example of a low-level attention computation and a low-level attention computation method, respectively, according to other example embodiments. The low-level attention computation method according to other example embodiments is described in detail with reference to FIGS. 9 and 10.

Specifically, FIG. 10 illustrates an example of a center-surround histogram computation.

The center-surround histogram computation may define two types of neighbor areas based on a random pixel. A center area 1011 and a surround area 1012 of a feature map 1010 may be defined based on the pixel. The surround area 1012 may include the center area 1011, and be larger than the center area 1011.

Histograms of the two neighboring areas may be extracted, and a feature distance 1021, in a low-level attention map 1020, of the two areas may be obtained using a variety of histogram distance measures. Accordingly, the low-level attention computation based on the feature distance may be performed.

In FIG. 9, for example, since a histogram distance between a center area 910 and a surround area 920 may be significant with respect to a left-most object, that is, a humanoid bee, a distance value may be high. However, since features of a center area 930 and a surround area 940 may be similar in a top-right background, a distance value may be low.

Accordingly, a low-level attention map where the left-most object (humanoid bee) is designated as an attention object may be generated.

In this instance, the low-level attention map may be generated using a variety of methods as well as the above-described method.

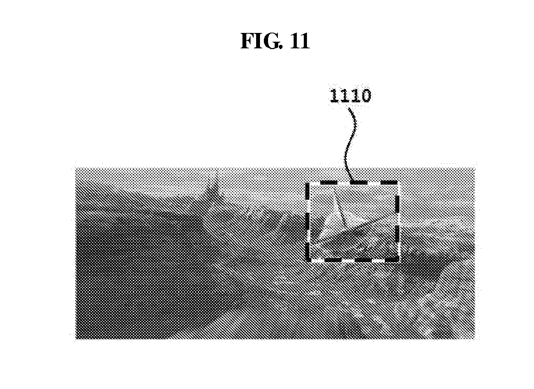

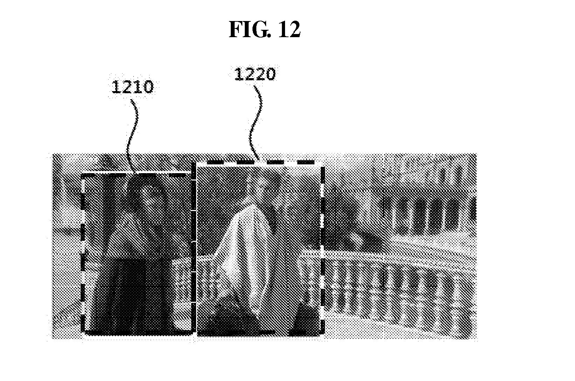

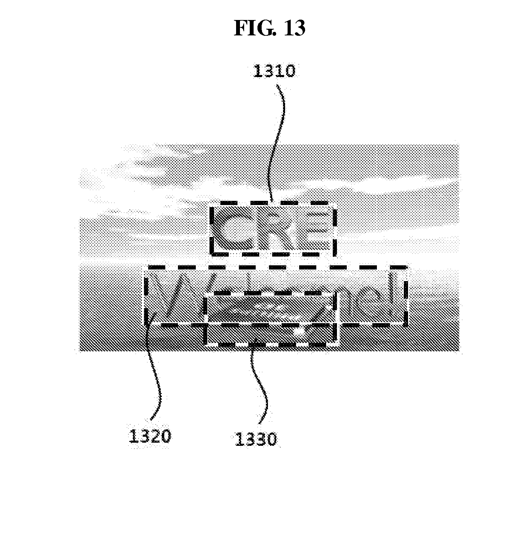

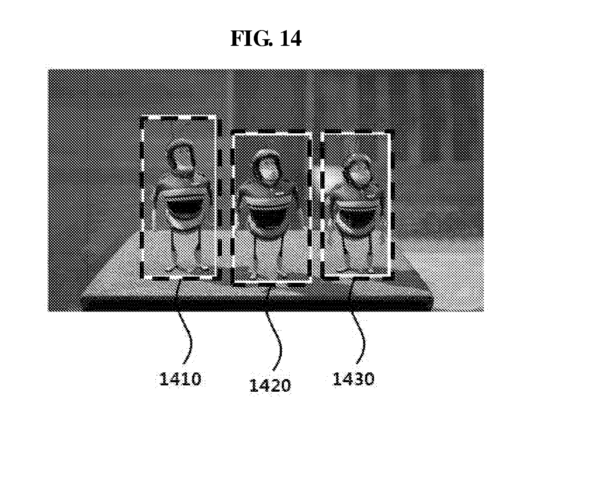

FIGS. 11 through 14 illustrate attention objects in images according to example embodiments.

FIGS. 11 through 14 illustrate examples of objects 1110, 1210, 1220, 1310, 1320, 1330, 1410, 1420, and 1430 which are visually interesting objects to an observer.

To convert the visually interesting objects into a 3D object, an object that is highly interesting is to be retrieved, and a pixel-based attention map is required for generation of a parallax.

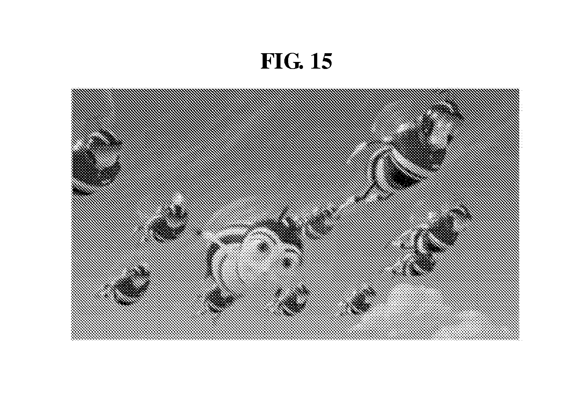

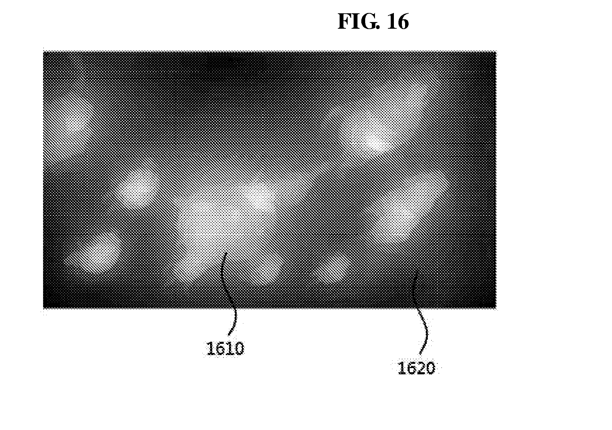

FIG. 15 illustrates an example of an image according to example embodiments. FIG. 16 illustrates a visual attention map where attention objects are displayed according to example embodiments.

FIG. 16 illustrates objects that are visually interesting to an observer in the image. As an object is more interesting for the observer, the object may be represented more brightly as illustrated in a portion 1610, and as an object is less interesting for the observer, the object may be represented in darker black as illustrated in a portion 1620.

According to example embodiments, an object such as a text or a figure may be located relatively closer to the observer using the visual attention map illustrated in FIG. 16, and thus an attention of the observer may be attracted and an appropriate 3D image may be provided.

Specifically, when the 3D image is provided, a 2D-to-3D image conversion apparatus and method may enable the portion 1610 in white to be viewed as being relatively closer to the observer, and enable the portion 1620 in black to be viewed as being relatively further away from the observer.

Accordingly, the observer may recognize the text or the figure as the 3D image which naturally protrudes towards is naturally conspicuous to the observer.

According to example embodiments, the method and apparatus of converting a 2D image to a 3D image based on visual attention may generate a visual attention map using the 2D image, generate parallax information based on the visual attention map, use the parallax information for conversion to the 3D image, and thereby may provide an observer with a stereoscopic 3D image.

Also, according to example embodiments, the method and apparatus of converting a 2D image to a 3D image based on visual attention may display a text or an object to appear relatively close to an observer in a scene to attract observer's attention, and thereby may enable the observer to see the 3D image where the text or the object is naturally conspicuous to the observer, and provide a stereoscopic 3D image.

In addition to the above described embodiments, example embodiments can also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as media carrying or including carrier waves, as well as elements of the Internet, for example. Thus, the medium may be such a defined and measurable structure including or carrying a signal or information, such as a device carrying a bitstream, for example, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

Although a few example embodiments have been shown and described, it would be appreciated by those skilled in the art that changes may be made in these example embodiments without departing from the principles and spirit of the disclosure, the scope of which is defined in the claims and their equivalents.

## Claims

1. A method of converting a two-dimensional (2D) image to a three-dimensional (3D) image based on visual attention, the method comprising:
extracting feature information associated with the visual attention from the 2D image;
generating a visual attention map using the feature information; and
generating parallax information based on the visual attention using the visual attention map.

2. The method of claim 1, wherein the generating of the visual attention map comprises:
extracting a feature map including the feature information associated with the visual attention; and
generating the visual attention map using the feature map.

3. The method of claim 2, wherein the generating of the visual attention map using the feature map generates the visual attention map based on a contrast computation which computes a difference between feature information values of each pixel of the feature map and neighbor pixels of each of the pixels,
and/or, wherein the generating of the visual attention map using the feature map computes a histogram distance of feature information values of a predetermined center area and a predetermined surround area of the feature map to generate the visual attention map,
and/or, wherein the feature information includes information about at least one of a luminance, a color, a motion, a texture, and an orientation.

4. The method of any of claims 1,2 or 3 wherein the generating of the visual attention map comprises:
extracting a plurality of feature maps including a plurality of types of feature information associated with the visual attention;
generating a plurality of visual attention maps using the plurality of feature maps; and
generating a final visual attention map through a linear fusion or a nonlinear fusion of the plurality of visual attention maps.

5. The method of claim 4, wherein the generating of the plurality of visual attention maps is based on a contrast computation which, for each of the types of feature information, computes a difference between a feature information value corresponding to each pixel of each of the plurality of feature maps and neighbor pixels of each pixel, and/or, wherein the generating of the plurality of visual attention maps using the plurality of feature maps computes a histogram distance of feature information values of a predetermined center area and a predetermined surrounding area of each of the plurality of feature maps to generate the plurality of visual attention maps, and/or, wherein the feature information includes information about at least one of a luminance, a color, a motion, a texture, and an orientation.

6. The method of any of claims 1-5 wherein the generating of the visual attention map comprises:
extracting a plurality of subordinate feature maps in a plurality of scales from a feature map including the feature information, the plurality of scales being different from each other;
generating a plurality of visual attention maps in the plurality of scales using the plurality of subordinate feature maps in the plurality of scales; and
generating a final visual attention map using the plurality of visual attention maps in the plurality of scales.

7. The method of claim 6, wherein the generating of the plurality of visual attention maps in the plurality of scales is based on a contrast computation which, for each of the scales, computes a difference between a feature information value, corresponding to each pixel of each of the plurality of subordinate feature maps and neighbor pixels of each pixel,
and/or , wherein the generating of the plurality of visual attention maps in the plurality of scales computes a histogram distance of feature information values of a predetermined center area and a predetermined surrounding area of each of the plurality of subordinate feature maps to generate the plurality of visual attention maps in the plurality of scales,
and/or , wherein the feature information includes information about at least one of a luminance, a color, a motion, a texture, and an orientation.

8. The method of any of claims 1-7, wherein the generating of the visual attention map comprises:
extracting a plurality of subordinate feature maps in a plurality of scales from a feature map including the feature information, the plurality of scales being different from each other;
generating a plurality of visual attention maps in the plurality of scales using the plurality of subordinate feature maps in the plurality of scales;
generating a plurality of visual attention combination maps which combines the plurality of visual attention maps in the plurality of scales for each type of feature information; and
generating a final visual attention map through a linear fusion or a nonlinear fusion of the plurality of visual attention combination maps.

9. The method of claim 8, wherein the generating of the plurality of visual attention maps in the plurality of scales using the plurality of subordinate feature maps in the plurality of scales is based on a contrast computation which, for each of the types of feature information, computes a difference between a feature information value corresponding to each pixel of each of the plurality of subordinate feature maps in the plurality of scales and neighbor pixels of each of the pixels,
and/or , wherein the generating of the plurality of visual attention maps in the plurality of scales using the plurality of subordinate feature maps in the plurality of scales computes a histogram distance of feature information values of a predetermined center area and a predetermined surrounding area of each of the plurality of subordinate feature maps to generate the plurality of visual attention maps in the plurality of scales.

10. The method of any of claims 1-9, further comprising:
generating a 3D image using the parallax information,
and/or , wherein the generating of the 3D image uses a left eye image and a right eye image based on the parallax information of the 2D image.

11. An apparatus of converting a 2D image to a 3D image based on visual attention, the apparatus comprising:
a visual attention map generation unit to extract feature information associated with the visual attention from the 2D image, and generate a visual attention map using the feature information; and
a parallax information generation unit to generate parallax information based on the visual attention using the visual attention map.

12. The apparatus of claim 11, wherein the visual attention map generation unit comprises:
a feature map extraction unit to extract a feature map including the feature information; and
a low-level attention computation unit to generate the visual attention map using the feature map.

13. The apparatus of claim 12, wherein the low-level attention computation unit generates the visual attention map based on a contrast computation which computes a difference between feature information values of each pixel of the feature map and neighbor pixels of each of the pixels ,
and/or,, wherein the low-level attention computation unit computes a histogram distance of feature information values of a predetermined center area and a predetermined surround area of the feature map to generate the visual attention map.

14. The apparatus of claim 13, wherein the visual attention map generation unit comprises:
a feature map extraction unit to extract a plurality of feature maps including a plurality of types of feature information associated with an object of the 2D image;
a low-level attention computation unit to generate the plurality of visual attention maps using the plurality of feature maps; and
a linear/non-linear fusion unit to generate a final visual attention map through a linear fusion or a nonlinear fusion of the plurality of visual attention maps,
and/or, wherein the visual attention map generation unit comprises:
a feature map extraction unit to extract a plurality of subordinate feature maps in a plurality of scales from a feature map including the feature information, the plurality of scales being different from each other;
a low-level attention computation unit to generate a plurality of visual attention maps in the plurality of scales using the plurality of subordinate feature maps in the plurality of scales; and
a scale combination unit to generate a final visual attention map using the plurality of visual attention maps in the plurality of scales.

15. The apparatus of claim 13, wherein the visual attention map generation unit comprises:
a feature map extraction unit to extract a plurality of subordinate feature maps in a plurality of scales from a feature map including the feature information, the plurality of scales being different from each other;
a low-level attention computation unit to generate a plurality of visual attention maps in the plurality of scales using the plurality of subordinate feature maps in the plurality of scales;
a scale combination unit to generate a plurality of visual attention combination maps which combines the plurality of visual attention maps in the plurality of scales for each feature information; and
a linear/non-linear fusion unit to generate a final visual attention map through a linear fusion or a nonlinear fusion of the plurality of visual attention combination maps.
